# EUROPÄISCHE PATENTANMELDUNG

(11) **EP 4 495 618 A1**
(43) Veröffentlichungstag der Anmeldung: **22.01.2025**
(21) Anmeldenummer: 24186065.9
(22) Anmeldetag: 02.07.2024
(51) Int. Cl.: G01S 7/02, G01S 13/931, H01Q 1/42

(54) **OPTISCHE BAUGRUPPE UND HERSTELLEN EINES FAHRZEUGBAUTEILS MIT OPTISCHER BAUGRUPPE**

(30) Priorität: 17.07.2023 DE 102023206762
(71) Anmelder: Magna Exteriors GmbH, 63877 Sailauf (DE); Magna Lighting Czech s.r.o,, 702 00 Ostrava (CZ)
(72) Erfinder: TUMA, Pavel, 73911 Przno (CZ); RADIC, Ales, 73924 Krmelin (CZ); MÜNKER, Klaus, 83556 Griesstätt (DE)
(74) Vertreter: Rausch, Gabriele

(57) **Zusammenfassung**

Optische Baugruppe (20) bestehend aus einem Gehäuse (15) mit einer Freisparung für einen Radarsensor, mit mindestens einem PCB (16) mit LEDs (13) bestückt und einer Radomabdeckung (1) mit einem Lichtleiter (2) und einer Anordnung von Linsen (6) und Folien (7,8), wobei der Lichtleiter (2) als ein einteiliger ringförmiger Konus ausgeführt ist, der mit einer Anbindung im Gehäuse (15) befestigt ist und dessen Ausgangsfläche (2b) mit einem Luftspalt von der Anordnung der Linsen (6) und Folien (7,8) beabstandet ist.

## Beschreibung

Die Erfindung betrifft eine optische Baugruppe mit einer beleuchteten Radomabdeckung für eine Öffnung eines Fahrzeugs und ein Verfahren zum Herstellen eines Fahrzeugbauteils mit einer optischen Baugruppe.

### Stand der Technik

In einer Karosserie bzw. Außenwandung eines Fahrzeugs sind regelmäßig funktionelle Elemente, wie bspw. Sensoren und dergleichen, anzuordnen. Zum Schutz dieser funktionellen Elemente, sowie aus ästhetischen Gründen kann des Weiteren vorgesehen sein, derartige Öffnungen für die funktionellen Elemente mit geeigneten Abdeckelementen abzudecken oder zu verschließen.

Marken-Embleme für Kraftfahrzeuge werden häufig an der Vorderseite eines Fahrzeugs angebracht. Ihre Positionen am Frontmodul sind optimal für nach vorne gerichtete Radarsensoren geeignet.

Ein Wunsch der Hersteller ist dabei, dass Embleme und Frontplatten dekorative Beleuchtungsfunktionen wie Positionslichter erhalten. Eine Kombination aus einem beleuchteten Emblem und einer Radarabdeckung muss sowohl die Anforderungen an die Beleuchtung als auch an die Radarleistung erfüllen.

Die Transparenz für Radarwellen im 76,5-GHz-Band erfordert geringe Absorption, minimierte Reflexion und optimierte Transmission sowie eine konstante Bauteildicke ohne elektronische Komponenten im Sichtfeld des Radarsensors. Um Bereiche direkt im Strahlengang des Radarsensors zu beleuchten, ist es daher notwendig, Licht von der Außenseite des Radarbereichs in dessen Zentrum zu leiten.

Diese Funktion wird von der Lichtleiteranordnung der Radarabdeckung erfüllt.

DE 10 2015 220 346 A1 zeigt betrifft ein Radom mit einer im Wesentlichen flächigen Frontplatte, welche frontseitig durchscheinend ausgebildet ist und welche rückseitig mit einer lichtundurchlässigen Schicht versehen ist, wobei in der lichtundurchlässigen Schicht zumindest eine Aussparung als Lichtdurchtritt ausgebildet ist, mit einem reflektierenden Bereich der flächigen Frontplatte, wobei der reflektierende Bereich der Aussparung benachbart angeordnet ist, mit zumindest einem im Wesentlichen flächigen Lichtleiter, welcher rückseitig an der lichtundurchlässigen Schicht angeordnet ist und mit zumindest einem Leuchtelement, welches mit dem Lichtleiter derart gekoppelt ist, so dass Licht in den Lichtleiter eintritt und so dass das Licht sich durch den zumindest einen Lichtleiter ausbreitet. An dem Lichtleiter ist ein Diffusorelement angeordnet, so dass sich durch den Lichtleiter ausbreitende Licht in das Diffusorelement eintritt, und durch das Diffusorelement ausbreitet und aus dem Diffusorelement austritt und an dem zumindest einen Lichtdurchtritt in die durchscheinende Frontplatte eintritt und gegebenenfalls an dem reflektierenden Bereich reflektiert wird, so dass es frontseitig aus der Frontplatte austritt, wobei das Diffusorelement eine modulierte Ausdehnung aufweist.

Bei der Herstellung der Radomabdeckung wurde ein Lichtleiterring, auf dem die Leiterplatten und die entsprechenden LEDs montiert sind, auf eine Lichtleitschicht der Radomabdeckung geklebt. Der Lichtleiterring wird durch Spritzgießen getrennt von der Lichtleitschicht gespritzt und anschließend montiert.

Aus der DE 10 2021 204 629 A1 ist ein Abdeckelement mit einem Gehäuse einer zwischen einer Frontplatte und einer Trägerplatte eingeformten und eingespritzten Folie bekannt, die zur Darstellung von mehrdimensionalen Strukturen dient, wobei die Trägerplatte rückseitig mit einer Heizplatte verbunden ist, und das Gehäuse aus einer ringförmigen Gehäusebasis und einer ringförmigen Gehäusefront besteht, und in der Gehäusebasis ein Leiterplattenring mit LEDs und Stecker eingebaut ist.

JP 2019-217 863 A zeigt eine lichtemittierende Anzeigevorrichtung, die eine einfache Konfiguration aufweist, elektrische Wellen übertragen kann und ein verbessertes Aussehen hat. Ein transparentes Element hat ein lichtemittierendes Teil, einen Metallschicht.

JP 2020-194 710 A zeigt einen Lampenkörper für ein Fahrzeug umfassend ein Gehäuse, eine äußere Linse zum Bilden einer Lampenkammer zwischen sich selbst und dem Gehäuse, eine Lichtführungslinse zum Bilden der Lampenkammer zwischen sich selbst und der äußeren Linse im Zusammenwirken mit dem Gehäuse und ein Radarsensor. Zwischen einer Lichtleitlinse und dem Gehäuse ist ein Dichtungselement vorgesehen, um die Verbindung zwischen dem Inneren und dem Äußeren der Lampenkammer durch einen Spalt zwischen der Lichtleitlinse und dem Gehäuse schließen.

JP 2021-027 005 A umfasst ein Lichtleitelement mit einer Einfallsfläche, sowie Abstrahlfläche für das Licht. Es ist ein Prisma vorgesehen, das das Licht reflektiert, das durch das Innere des Lichtleiters fällt. Ein Lichtsteuerungskörper befindet sich zwischen einer Lichtquelle und der Einfallsfläche. Der Lichtsteuerkörper steuert das von der Lichtquelle abgegebene und auf die Auftrefffläche auftreffende Licht.

Es ist Aufgabe der Erfindung, Schritte in der Herstellung des zentralen Lichtleiterrings zu beseitigen und die Montage- und Logistikkosten durch ein bereits vorgefertigte beleuchtete Radomabdeckung zu reduzieren.

### Beschreibung der Erfindung

Die Aufgabe wird gelöst mit einer optischen Baugruppe bestehend aus einem Gehäuse mit einer Aufnahme für einen Radarsensor, mit mindestens einem PCB mit LEDs bestückt und einer Radomabdeckung mit einem Lichtleiter und einer Anordnung von Linsen und Folien, wobei der Lichtleiter als ein einteiliger ringförmiger Konus ausgeführt ist, der mit einer Anbindung im Gehäuse befestigt ist und dessen Ausgangsfläche mit einem Luftspalt von der Anordnung der Linsen und Folien beabstandet ist.

Diese Anordnung erlaubt ein homogenes beleuchtetes Erscheinungsbild eines Emblems.

Die optische Baugruppe ist so ausgestaltet, dass der ringförmige Konus des Lichtleiters sich vom Durchmesser eines oberen Rand zum Durchmesser der inneren Linse verjüngt.

Es ist von Vorteil, wenn der obere Rand des Lichtleiters als gezahnte Struktur als Kollimator für das Licht der LEDs ausgebildet ist.

Der Luftspalt zwischen der schräg angeordneten Ausgangsfläche des Lichtleiter und der im spitzen Winkel dazu angeordneten Eingangsfläche der inneren Linse beträgt 0,5mm bis 4,0mm, bevorzugt 2,5mm bis 3,5 mm.

Der Lichtleiter weist Befestigungsfahnen auf, die senkrecht zur oberen Kante des Lichtleiters verlaufen.

Die Radomabdeckung weist einen Aufbau mit einer äußeren transparenten Deckschicht, einer äußeren Folie, einer äußeren Linse, einer inneren Linse und einer inneren Folie auf.

Die innere Linse weist eine Halterung für das Gehäuse auf.

Die Halterung sowie die Anbindung an das Gehäuse erfolgt über Dichtungen, Klebungen, Verschraubungen oder Verklipsungen.

Weitere optische Baugruppen können in einem vergrößerten Gehäuse angeordnet sein.

Die Aufgabe wird auch gelöst mit einem Verfahren zur Herstellung eines Verkleidungsteils eines Fahrzeugs, das ein Radom enthält, wobei eine optische

Baugruppe hergestellt wird und in ein Kunststoff-Bauteil in einer Ausnehmung als Ganzes befestigt wird.

### Beschreibung der Figuren

Figur 1 zeigt ein Schnittbild der Radomabdeckung,
Figur 2 zeigt eine Ansicht schräg von vorne auf die Abdeckung,
Figur 3 zeigt eine Aufsicht auf die Abdeckung,
Figur 4 zeigt einen Schnitt entlang der Linie A-A
Figur 5 zeigt eine Vergrößerung des Schnittbilds der Figur 4,
Figur 6 zeigt eine beispielhafte optische Baugruppe.

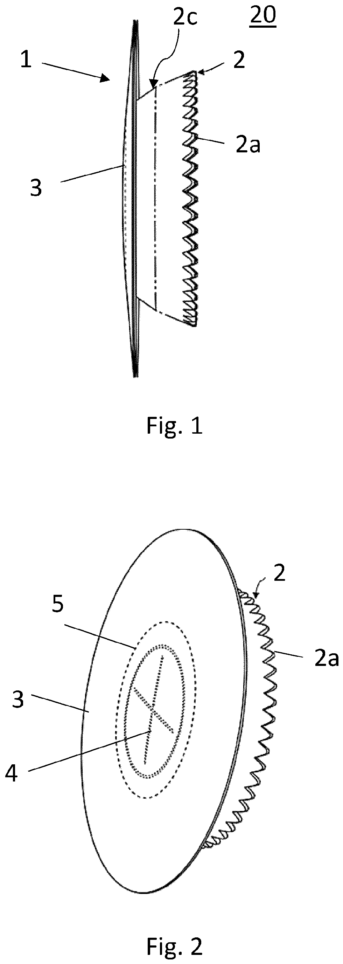

Figur 1 zeigt eine beleuchtete Radomabdeckung 1, die Teil einer optischen Baugruppe 20 ist. Die Radomabdeckung 1 besteht aus Linsen und Folien, wobei zur optischen Baugruppe 20 noch elektronische Komponenten, Befestigungen und Gehäuse dazukommen.

Eine transparente Deckschicht 3 begrenzt die optische Baugruppe 20 zur Fahrzeugaußenseite hin. Ein Lichtleiter 2 ist als ringförmiger Kranz ausgebildet, wobei sich der Kranz von den Kollimatorstellen 2a zur transparenten Deckschicht 3 hin verjüngt.

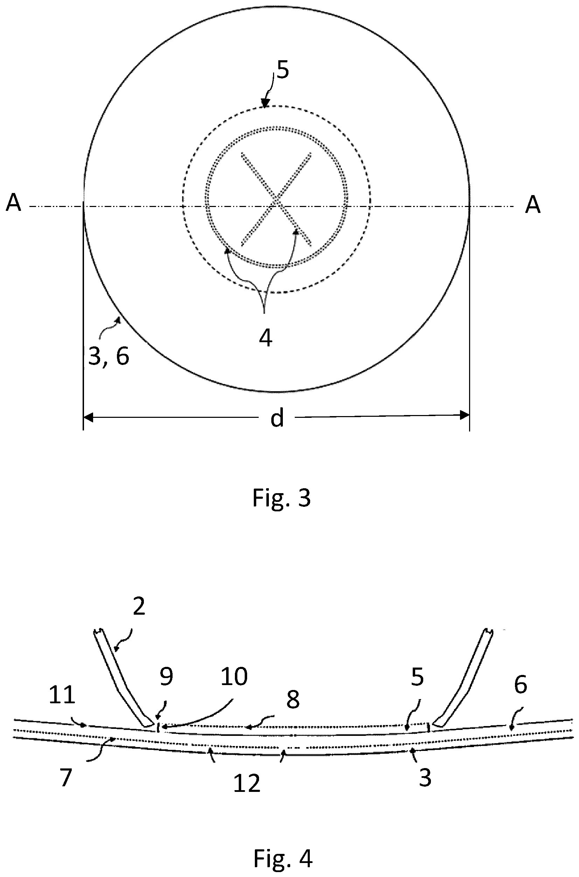

In Figur 2 ist in der Aufsicht noch zusätzlich schematisch dargestellt, dass ein Emblem 4 durch die transparente Deckschicht 3 scheinen kann. Der gestrichelte Kreis deutet die Lage einer inneren Linse 5, wie auch in Figur 3, an.

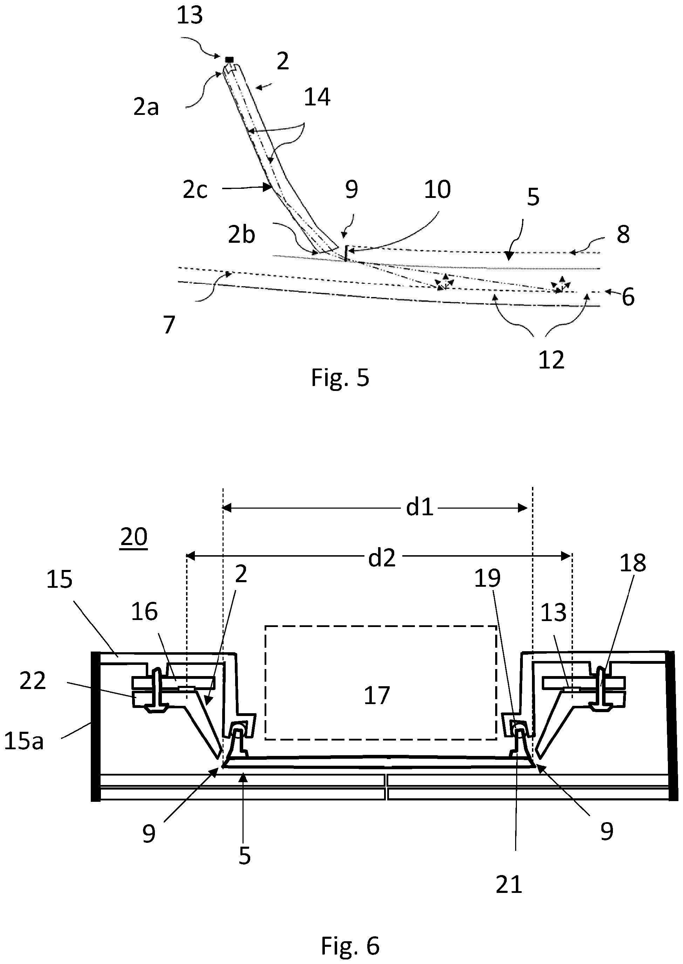

Die Figuren 4 und 5 sind Schnittbilder der Radomabdeckung 1 entlang der Schnittlinie A-A der Figur 3.

Auf die transparente Deckschicht 3 folgt eine äußere Folie 7, deren Vorderseite, die durch die transparente Deckschicht 3 vom Äußeren des Fahrzeugs aus sichtbar ist, dekorativ, z. B. in Wagenfarbe, gestaltet ist. Auf der Rückseite der äu-ßeren Folie 7 ist eine lichtreflektierende Schicht aufgebracht. Die äußere Folie 7 ist von Öffnungen 12 durchbrochen, in ihrer Gesamtheit ein Muster, beispielsweise ein Emblem 4 darstellen.

Eine äußere Linse 6 schützt die äußere Folie 7 und besteht aus einem Standard-Schutzplastikmaterial. Sowohl die äußere Folie 7 als auch die äußere Linse 6 weisen denselben Durchmesser d, bzw. dieselbe Außenkontur wie die transparente Abdeckung 3 auf.

Auf der äußeren Linse 6 ist eine innere Linse 5 aus Kunststoff mit geringem Absorptionskoeffizienten für die Lichtverteilung aufgebracht. Die innere Linse 5 weist einen geringeren Durchmesser d1, geringere Außenkontur als die transparente Deckschicht 3 auf.

Die innere Linse 5 ist zum Fahrzeuginneren hin mit einer inneren Folie 8 versehen, die auf der Vorderseite zur inneren Linse 5 hin reflektierend und auf der Rückseite zum Fahrzeuginneren hin absorbierend für das eingekoppelte Licht ist.

Der Weg der Lichtstrahlen 14 ist in Figur 5 beispielhaft zu sehen.

Das von einer Lichtquelle, einer LED 13, kommende Licht wird durch Kollimatoren 2a in den Lichtleiter 2 eingekoppelt. Die Kollimatoren 2a sind dabei entlang des Rings des Lichtleiters 2 als zahnartige Strukturen angeordnet. Der Begriff Ring ist dabei weit gefasst und beschreibt auch nicht kreisrunde Strukturen wie Ellipsen, oder Freiformen, die sich rahmenartig um die innere Linse erstrecken. Jede der zahnartigen Strukturen nimmt das Licht einer jeweilig zugeordneten LED 13 auf. Das kollimierte Licht breitet sich als Lichtstrahl 14 durch den Lichtleiter 2 aus und wird von den jeweiligen Seitenwänden des Lichtleiters 2 mit Totalreflektion zum Ausgang des Lichtleiters 2 mit der Ausgangsfläche 2b reflektiert. Der Lichtleiter 2 weist dabei mindestens an einer Stelle einen Verlaufsknick 2c auf, um die Lichtstrahlen in den gewünschten Winkel zur Ausgangsfläche 2b zu bringen.

Die Lichtstrahlen 14 sollen dabei möglichst mit einer einzigen Totalreflexion auf die Austrittsfläche 2b des Lichtleiters 2 geleitet werden, um Verluste zu minimieren.

Die Ausgangsfläche 2b des Lichtleiters 2 ist so gestaltet, dass das Licht in einem spitzen Winkel auf die Eingangsfläche 10 der innere Linse 5 gerichtet ist. Zwischen der Eingangsfläche 10 der inneren Linse 5 und der Ausgangsfläche 2b des Lichtleiters 2, die schräg zur Eingangsfläche 10 der inneren Linse 5 verläuft, ist ein Luftspalt 9 vorhanden. Der Luftspalt 9 ist ein Ringspalt zwischen dem ringförmigen Lichtleiter 2 und der inneren Linse 5.

Das aus dem Lichtleiter austretende Licht durchquert den Luftspalt 9 zwischen dem Lichtleiter 2 und der inneren Linse 5. Die Größe des Luftspalts 9 muss dabei über die gesamte Ringstruktur exakt eingehalten werden, um die gewünschte fotometrische Leistung zu erhalten.

Das Licht in der Mehrschichtlinse, die sich aus der inneren Linse 5 und der äußeren Linse 6 zusammensetzt, bewegt sich zwischen den zwei Reflexionsfolien, der inneren Folie 8 und der äußeren Folie 6, die das Licht mit einer Lambert-Verteilung reflektieren. Wenn der Lichtstrahl eine Öffnung 12 in der äußeren Folie 7 erreicht, tritt er von der äußeren Linse 6 aus gesehen in die transparente Deckschicht 3 und verlässt die Radomabdeckung 1.

Figur 6 zeigt die optische Baugruppe 20 in einem Ausführungsbeispiel. Die bereits beschriebene Radomabdeckung 1 ist in einem sie umschließenden Gehäuse 15 verbaut. Dazu werden Halterungen 21 auf der inneren Linse 5 angebracht. Das nicht reflektierende, nicht transparente Material der Halterung 21 soll den Lichtweg nicht beeinflussen.

An der Halterung 21 wird das Gehäuse 15 befestigt, wobei hier eine Dichtung 19, eine Klebeverbindung, ein Stecksystem und/oder eine Verschraubung eingesetzt werden kann.

Das Gehäuse 15 dient zur Anbindung des ringförmigen PCBs 16, auf dem die LEDs 13 sitzen, wobei der Ring der LEDs 13 den Durchmesser d2 aufweist. Dieser Durchmesser d2 ist größer als der Durchmesser d1 der inneren Linse 5, aber kleiner als der Durchmesser d der äußeren Linse 6.

Über Schrauben 18 sind der Lichtleiter 2 und das PCB am Gehäuse 15 befestigt. Dazu weist der konische, ringförmige Lichtleiter 2 Befestigungsfahnen 22 auf, die sich senkrecht zum gezahnten Rand jeweils nach außen erstrecken. Das ringförmige Gehäuse 15 bietet zentral eine Aufnahme für einen Radarsensor 17, wie er in der Figur 6 gestrichelt angedeutet ist.

Die Form und die Anbindung des Gehäuses ist ein Beispiel, die Gehäusewände 15a können durch weitere Bauteile des Fahrzeugs dargestellt sein, oder auch weiter entfernt von der Radomabdeckung liegen. Das Gehäuse 15 kann auch noch weitere optische Baugruppen für die Außenverkleidung eines Fahrzeugs umfassen.

Die optische Baugruppe wird in der Herstellung vorgefertigt und als ein Bauteil beispielsweise im Frontmodul des Fahrzeugs verbaut. Dadurch entfallen Verschraubungen und Klebungen an optischen Bauteilen direkt beim Verbau in das Frontmodul.

### Bezugszeichen

1 Radomabdeckung
2 Lichtleiter
2a Kollimator
2b Austrittsfläche Lichtleiter
2c Verlaufsknick
3 Transparente Deckschicht
4 Emblem
5 innerer Linse
6 äußere Linse
7 äußere Folie
8 innerer Folie
9 Luftspalt
10 Eingangsfläche innere Linse
11 Verbindung innere und äußere Linse
12 Öffnungen
13 LED
14 Lichtstrahlen
15 Gehäuse
16 PCB
17 Radarsensor
18 Schraube
19 Dichtung
20 optische Baugruppe
21 Halterung
22 Befestigungsfahne

## Patentansprüche

1. Optische Baugruppe (20) bestehend aus einem Gehäuse (15) mit einer Aufnahme für einen Radarsensor (17), mit mindestens einem PCB (16) mit LEDs (13) bestückt und einer Radomabdeckung (1) mit einem Lichtleiter (2) und einer Anordnung von Linsen, mit einer inneren Linse (5) und einer äu-ßeren Linse (6), und Folien (7,8), wobei der Lichtleiter (2) als ein einteiliger ringförmiger Konus ausgeführt ist, der mit einer Anbindung im Gehäuse (15) befestigt ist und dessen Ausgangsfläche mit einem Luftspalt (9) von der Anordnung der Linsen und Folien beabstandet ist, **dadurch gekennzeichnet, dass** der Lichtleiter Befestigungsfahnen (11) aufweist, die senkrecht zur oberen Kante des Lichtleiters (2) verlaufen und die sich senkrecht zum Rand jeweils nach außen erstrecken, und das Gehäuse (15) zur Anbindung des ringförmigen PCBs (16) dient, auf dem die LEDs (13) sitzen, wobei der Ring der LEDs (13) einen Durchmesser d2 aufweist, der größer ist als der Durchmesser d1 der inneren Linse (5), aber kleiner als der Durchmesser d der äußeren Linse (6).

2. Optische Baugruppe (20) nach Anspruch 1, **dadurch gekennzeichnet, dass** der ringförmige Konus des Lichtleiters (2) sich vom Durchmesser eines oberen Randes zum Durchmesser der inneren Linse (5) verjüngt.

3. Optische Baugruppe nach Anspruch 1 oder 2, **dadurch gekennzeichnet, dass** der obere Rand des Lichtleiters (2) als gezahnte Struktur als Kollimator für das Licht der LEDs (13) ausgebildet ist.

4. Optische Baugruppe nach einem der vorhergehenden Ansprüche, **dadurch gekennzeichnet, dass** der Luftspalt (9) zwischen der schräg angeordneten Ausgangsfläche des Lichtleiter und der im spitzen Winkel dazu angeordneten Eingangsfläche (10) der inneren Linse (5) 0,5mm bis 4,0mm, bevorzugt 2,5 mm bis 3,5 mm beträgt.

5. Optische Baugruppe (20) nach einem der vorhergehenden Ansprüche,
**dadurch gekennzeichnet, dass** die Radomabdeckung (1) einen Aufbau mit einer äußeren transparenten Deckschicht (3), einer äußeren Folie (7), einer äußeren Linse (6), einer inneren Linse (5) und einer inneren Folie (8) aufweist.

6. Optische Baugruppe (20) nach einem der vorhergehenden Ansprüche,
**dadurch gekennzeichnet, dass** die innere Linse (5) eine Halterung (21) für das Gehäuse aufweist.

7. Optische Baugruppe (20) nach einem der vorhergehenden Ansprüche,
**dadurch gekennzeichnet, dass** die Halterung (21) sowie die Anbindung an das Gehäuse (15) über Dichtungen, Klebungen, Verschraubungen und/oder Verklipsungen erfolgt.

8. Optische Baugruppe (20) nach einem der vorhergehenden Ansprüche,
**dadurch gekennzeichnet, dass** weitere optische Baugruppen in einem vergrößerten Gehäuse angeordnet sind.

9. Verfahren zur Herstellung eines Verkleidungsteils eines Fahrzeugs, das ein Radom enthält, wobei eine optische Baugruppe (20) nach einem der vorhergehen Ansprüche hergestellt wird und in ein Kunststoff-Bauteil in einer Ausnehmung als Ganzes befestigt wird.
